# EUROPÄISCHE PATENTSCHRIFT

(11) **EP 3 408 336 B1**
(45) Veröffentlichungstag und Bekanntmachung des Hinweises auf die Patenterteilung: **29.06.2022**
(21) Anmeldenummer: 17701169.9
(22) Anmeldetag: 27.01.2017
(51) Int. Cl.: C09D 5/18

(54) **TEXTILIEN MIT FLAMMSCHUTZFUNKTION**
TEXTILES HAVING FLAME PROTECTION FUNCTION
TEXTILES À FONCTION D'IGNIFUGATION

(30) Priorität: 29.01.2016 CH 1162016
(43) Veröffentlichungstag der Anmeldung: 05.12.2018
(73) Patentinhaber: Schoeller Textil AG, 9475 Sevelen (CH)
(72) Erfinder: LOTTENBACH, Roland, 9422 Staad (CH); GARTMANN, Vedran, 8048 Zürich (CH)
(74) Vertreter: Rentsch Partner AG
(86) Internationale Anmeldenummer: PCT/EP2017/051831
(87) Internationale Veröffentlichungsnummer: WO 2017/129783

(56) Entgegenhaltungen:
- EP-A2- 1 439 146
- WO-A1-2009/055046
- WO-A1-2014/078943
- US-A1- 2006 202 176
- US-A1- 2008 160 852
- DATABASE WPI Week 201634 Thomson Scientific, London, GB; AN 2016-002950 XP002758762, -& CN 105 177 992 A (SUZHOU WEIERDE IND & TRADE CO LTD) 23. Dezember 2015 (2015-12-23)
- DATABASE WPI Week 200939 Thomson Scientific, London, GB; AN 2009-J89931 XP002758742, -& JP 2009 120994 A (SAKAI TEXTILE MFG CO LTD) 4. Juni 2009 (2009-06-04)

## Beschreibung

### Technisches Gebiet

Die Erfindung betrifft Flammschutz-Schaumbeschichtungen für textile Flächenprodukte, wobei die Beschichtungen salzgehaltreduzierten plättchenförmigen Blähgraphit mit einer Partikelverteilung mit Anteil >80 Gewichtsprozent mit Durchmesser von mindestens 0.2 mm, und/oder einem Mindestanteil von 70% mit Maschenweite > 50 Mesh (0.3 mm), mindestens ein Bindemittel und mindestens einen Schaumstabilisator umfassen, sowie Verfahren zu deren Herstellung, deren Verwendung zur Herstellung von textilen Flächenprodukten sowie textile Flächenprodukte mit solchen Flammschutz-Schaumbeschichtungen.

### Stand der Technik

Brandschutzbekleidungen gehören zur Grundausrüstung von Personen, die im Brandfall oder anderen Extremsituationen Feuer und Hitze ausgesetzt sind. Eine optimale Brandschutzbekleidung zeichnet sich durch Schutz gegen verschiedene äussere Einflüsse, insbesondere Feuer und Hitze, aus. Dies bedingt ein selbstverlöschendes Verhalten (Limiting Oxygen Index LOI (Sauerstoffindex) >25%), verhindern einer Lochbildung, Isolationsvermögen im Ernstfall und Formstabilität. Gleichzeitig muss die Brandschutzbekleidung diverse Gebrauchseigenschaften erfüllen, welche bei den klassischen, inhärent flammhemmenden Fasern nicht gegeben sind. Als Beispiel können hier die Abriebfestigkeit, die UV-Beständigkeit oder die Möglichkeit in Leuchtfarben zu produzieren genannt werden.

Aus dem Stand der Technik ist die Verwendung von Blähgraphit als flammhemmendes Mittel in verschiedenen Anwendungen bekannt. Blähgraphit, der durch Säurebehandlung von Flockengraphit hergestellt wird, ist in der Lage, ein Vielfaches seiner eigenen Masse an brennbarem Material flammfest machen zu können. Im Brandfall, bzw. wenn sie hohen Temperaturen ausgesetzt werden, expandieren die Teilchen des Blähgraphits und vergrössern ihr Volumen um ein Vielfaches. Die vom expandierten Blähgraphit zum Beispiel auf einer textilen Unterlage gebildete Intumeszenzschicht schützt diese textile Unterlage sehr effizient, da sie den Sauerstoffzutritt bzw. eine Flammenbildung und Flammenausbreitung verhindert und durch die geringere Dichte des expandierten Blähgraphits zudem eine sehr gute thermische Isolationswirkung aufweist. Die Hitze kann sich nur schlecht durch die Intumeszenzschicht ausbreiten, so dass die Unterlage und darunterliegende Gewebe (Haut) effizient geschützt werden.

Flammschutzbeschichtungen basierend auf Blähgraphit sind für verschiedene Anwendungen im Einsatz. Bekannt sind unter anderem Brandschutzplatten, intumeszente Baustoffe, Brandschutzbeschichtungen, die im Brandfall selbstständig aufschäumen und das zu schützende Objekt vor der Brandhitze schützen.

Trotz jahrzehntelanger Erfahrung und Forschung sind jedoch erhältliche Flammschutzbeschichtungen für Textilien entweder nicht ausreichend wirksam und/oder haben einen geringen Tragekomfort (Inflexibilität, Gewicht, eingeschränkte Bewegungsfreiheit) und/oder können toxikologisch bedenklich sein. Die Verwendung von inhärent flammhemmenden Textilien (wie zum Beispiel Aramid, Modacryl oder viskose FR-Fasern) ist im Allgemeinen limitiert durch die niedrige Abriebfestigkeit, die eingeschränkte Farbgebung, der ebenfalls eingeschränkte Tragekomfort wie auch der hohe Preis. Bei bekannten Verwendungen von Blähgraphit als flammhemmendes Mittel in Textilbeschichtungen ist dessen Teilchengrösse stark limitiert. Kleine Blähgraphittypen sind prinzipiell, was die Flammschutzeffektivität angeht, weniger wirksam, so ist beispielsweise deren Expansionsvolumen und der Expansionsdruck deutlich geringer. Beides sind Voraussetzungen, um Textilien flammfest auszurüsten, denn die durch Flammeneinwirkung erweichende, brennbare textile Oberfläche muss schliesslich so schnell wie möglich durchstossen und verdrängt werden. Um mit diesen Blähgraphit-Partikeln eine hohe Flammschutzwirkung zu erreichen, muss die Beschichtung einen hohen Anteil an Blähgraphit enthalten oder wiederum mit hoher Auflage beschichtet werden, was die Textilien steif macht und den Tragekomfort senkt und sich auf alle Gebrauchseigenschaften nachteilig auswirkt. Auf flächendeckende Beschichtungen muss daher üblicherweise verzichtet werden. Dies verringert die Schutzwirkung und schränkt somit die Einsatzmöglichkeiten für solche Schutz-Textilien ein.

Daher ist das Angebot an funktionellen Flammschutzmaterialien im Allgemeinen und insbesondere auf Blähgraphit Basis für Textilien nach wie vor gering.

### Aufgabe der Erfindung

Die Aufgabe der Erfindung liegt darin, die bei den bekannten Flammschutztextilien auftretenden, oben erläuterten Nachteile zu vermeiden und eine Beschichtung mit erhöhtem Flammschutz für textile Flächenprodukte bereitzustellen.

Ebenfalls Aufgabe der Erfindung ist es ein Verfahren zur Herstellung solcher erfindungsgemässer Flammschutzbeschichtungen bereitzustellen.

Eine weitere Aufgabe der Erfindung besteht darin, flammhemmende, textile Flächenprodukte mit erfindungsgemässen Flammschutzbeschichtungen zur Verfügung zu stellen.

Eine weitere Aufgabe der Erfindung besteht darin, flammhemmende, textile Flächenprodukte bereitzustellen, welche zusätzlich zum erhöhten Flammschutz ebenso eine hohe Wasserdampfdurchlässigkeit und hohe Atmungsaktivität besitzen, flexibel sind und somit eine hohe Bewegungs- und Handlungsfreiheit aufweisen. Eine weitere Aufgabe der Erfindung ist es - im Gegensatz zu den inhärent flammhemmenden Textilien - flammhemmende, textile Flächenprodukte bereitzustellen, welche zusätzlich zum erhöhten Flammschutz eine auf Leuchtfarben basierende optische Schutzfunktion (gemäss EN ISO 20471) aufweisen und dadurch optisch auffallen und visuell gut wahrnehmbar sind.

Ebenfalls Aufgabe der Erfindung ist es ein Verfahren zur Herstellung solcher erfindungsgemässer textiler Flächenprodukte bereitzustellen.

Diese Aufgabe wird erfindungsgemäss durch die Merkmale der unabhängigen Ansprüche gelöst. Weitere vorteilhafte Ausgestaltungen der Erfindung sind in den abhängigen Ansprüchen angeführt.

### Darstellung und Ausführung der Erfindung

Die Herstellung von kommerziell erhältlichem Blähgraphit ist bekannt. Durch chemische Behandlung von Graphit lagern sich Behandlungsmittel, wie Schwefel- und Stickstoffverbindungen, in die Gitterstruktur des Graphits ein, wodurch der Graphit blähfähig wird.

Gemäss des vorliegenden erfindungsgemässen Verfahren wird nun in einem zusätzlichen Behandlungsschritt der kommerziell erhältliche Blähgraphit (im Folgenden auch Standard-Blähgraphit genannt) einem Nachwaschprozess unterzogen, vorzugsweise durch wässriges Nasssieben, wodurch der auswaschbare Salzgehalt kontrolliert auf einen Anteil von unter 0.8% reduziert werden kann. Bevorzugt wird der auswaschbare Salzgehalt auf unter 0.5% und besonders bevorzugt auf unter 0.2% reduziert.

In einer bevorzugten Ausführungsform wird der Standard-Blähgraphit mit Wasser nachgewaschen.

Der Salzgehalt kann mittels einer modifizierten Soxhlet-Extraktion gemäss DIN EN ISO 13944, wobei destilliertes Wasser anstelle eines organischen Lösungsmittels eingesetzt wird, bestimmt bzw. bestätigt werden.

Durch diese Nachbehandlung, respektive dieses Entsalzen kann Blähgraphit als Schaumbeschichtung mit grösserer Plättchengrösse für die Herstellung von Textilbeschichtungen eingesetzt werden. Durch die Nachbehandlung wird vermieden, dass an der Oberfläche der Blähgraphit-Plättchen anwesende Salze (z.B. Schwefelsäuresalze, Nitrat- und Nitritsalze) negative Effekte, wie unter anderem Koagulation, auf die Schaumbeschichtung haben können. Dank der grösseren Plättchengrösse vergrössert sich das Expansionsvolumen- und Druck exponentiell und der Blähgraphit-Anteil in der Beschichtung kann bei besserer Schutzwirkung verringert werden. Im Gegensatz zu der bisher üblichen Punktbeschichtung, kann die Oberfläche des Textils durchgehend flammhemmend ausgerüstet werden, was die Performance weiter steigert. Die Expansion und der dadurch erzeugte Flammschutz werden um ein Vielfaches erhöht, ohne negative Einflüsse auf die weiteren Eigenschaften wie Wasserdampfdurchlässigkeit, Atmungsaktivität, Bewegungs- und Handlungsfreiheit zu haben.

Durch die Reduktion des auswaschbaren Salzgehalts des Blähgraphits (bzw. die dadurch möglich gewordene Schaumbeschichtung), können grössere Blähgraphit-Plättchen in den erfindungsgemässen Flammschutzbeschichtungen verwendet werden und es können erstmals flächendeckende, kontinuierliche Beschichtungen hergestellt werden, mit einer um ein Vielfaches grösseren Expansion und einer entsprechend dickeren Intumeszenzschicht, welche der exponierten Person einen entsprechend höheren, ausgezeichneten Schutz vor Flammenauswirkungen bietet. Mithilfe einer Untersuchung der Wärmetransmission gemäss ISO 9151:1995 konnte gezeigt werden, dass die Zeit zwischen einer Erwärmung der Haut um 12 °C (einsetzende Schmerzen) bis zu einer Erwärmung um 24 °C (Verbrennung 2. Grades), in welcher der Träger auf das Feuer reagieren kann, durch das eingesetzte salzgehaltreduzierte Blähgraphit gegenüber einem herkömmlichen Flammschutzartikel von 1.6 auf 3.2 s verdoppelt werden kann.

Der im erfindungsgemässen Verfahren als Ausgangsmaterial verwendete Blähgraphit wird insbesondere aus Flockengraphit mittels Säurebehandlung hergestellt. Dieser Blähgraphit besteht im Wesentlichen aus Kohlenstoff und aus geringfügigen Beimengungen von natürlichen Gesteinsbestandteilen und Mineralien. Hinzu kommen noch Blähmittel, die jedoch im nachgewaschenen Zustand nur noch im Inneren der Flocken eingebunden sind.

Es kann Blähgraphit unterschiedlicher technischer Spezifikation eingesetzt werden: der Blähgraphit kann beispielsweise einen Kohlenstoffgehalt von mindestens 90%, insbesondere mindestens 92% und vorzugsweise mindestens 98% aufweisen. Ferner kann der Aschegehalt im Blähgraphit so gewählt sein, dass er bei maximal 10%, insbesondere maximal 8% und vorzugsweise maximal 2% liegt.

Gemäss der vorliegenden Erfindung weisen mindestens 80%, vorzugsweise mindestens 90%, bevorzugt 95% des Blähgraphits die Form von Plättchen mit einem mittleren Durchmesser von mindestens 0.2 mm, vorzugsweise zwischen 0.3 und 2.0 mm, am meisten bevorzugt zwischen 0.3 und 0.5 mm, und einer Dicke von < 0.5 mm, vorzugsweise zwischen 0.01 und 0.1 mm, bevorzugt 0.05 mm und/oder mindestens 70% des Blähgraphits eine Maschenweite von > 50 Mesh (0.3 mm) auf. Die aufgrund der Zunahme der Plättchengrösse erzielte, gesteigerte Expansion beträgt, bezogen auf eine Temperatur von 1000 °C, mindestens 40 ml/g, insbesondere mindestens 100 ml/g und vorzugsweise mindestens 300 ml/g, wobei die Starttemperatur, bei der die Expansion beginnt, vorzugsweise zwischen 160 und 200 °C, insbesondere 180 und 200 °C und vorzugsweise bei 190 °C liegt.

Diese charakteristischen Eigenschaften des Blähgraphits, insbesondere die durch den reduzierten Salzgehalt mögliche grössere Plättchengrösse, haben einen direkten Einfluss auf die Expansionsrate, die sich um ein Vielfaches steigert, was einen erhöhten Flammschutz bedeutet.

Zur Herstellung der erfindungsgemässen Flammschutzbeschichtung wird das Bindemittel vorgelegt und mit dem Blähgraphit und dem Schaumstabilisator zu einer Paste vermengt. Falls erwünscht bzw. notwendig werden dann weitere Zusatzstoffe für eine bessere Herstellbarkeit und Eignung des Beschichtungsmaterials, wie z.B. Vernetzer, Pigment und Fluorcarbon zugegeben. Anschliessend können unter Rühren optionale Zusätze mit Zusatzfunktionen (Beständigkeit gegen Säuren, Laugen, Lösungsmittel, Lichtschutzmittel, Radikalfänger etc.) zugegeben werden.

Die im Rahmen des erfindungsgemässen Verfahrens verwendeten Bindemittel sind Polyurethane, Polyacrylate oder Polyvinylacetate, vorzugsweise Polyurethane mit einer Molmasse von < 700 g/mol, die durch Umsetzung von in der Polyurethanchemie bekannten mehrwertigen, aliphatischen, cycloaliphatischen und aromatischen Isocyanaten, wie beispielsweise Hexandiisocyanat, den verschiedenen Isomeren des Tolylidendiisocyanats, Diphenylmethandiisocyanat mit Verbindungen mit mindestens 2, insbesondere mindestens 3 reaktionsfähigen funktionellen Gruppen X-H (X = N, O, S) und einem Molekulargewichtsbereich von etwa 100 bis 6000 zugänglich sind. Als solche Verbindungen sind höhermolekulare reaktive Verbindungen, wie Polyester, Polyether, Polyacetale, Polyamide und Polyesteramide, aber auch niedermolekulare Polyole mit insbesondere mehr als 2 OH-Gruppen, z. B. Trimethylolpropan, 1,3,5-Hexantriol, Glycerin und Pentaerythrit oder Alkanolamine, z. B. Triethanolamin zu nennen; die erhaltenen Polyurethane besitzen jeweils endständige Hydroxyl-, Carboxyl- respektive Aminoaber auch NCO-Gruppen, wobei die Umsetzung der höhermolekularen reaktiven Verbindungen mit den Isocyanaten gegebenenfalls auch in Gegenwart von Kettenverlängerungsmitteln vorgenommen wird, wie es dem Fachmann durchaus bekannt ist.

In der Regel wird zur Herstellung der Paste eine Dispersion eines Bindemittels beispielsweise eines Polyurethans auf Wasserbasis verwendet. Insbesondere geeignet sind somit ionomere Polyurethane. Die Polyurethan-Dispersionen weisen vorzugsweise einen Feststoffgehalt von 30 bis 70 Gew.-%, insbesondere ca. 50 Gew.-% auf. Als Polyolkomponente eignen sich vorzugsweise verschiedene Polyesterpolyole und Polyetherpolyole, wie z. B. Pluriol^{®}P 2000 (BASF) und Caradol^{@}36-3 (Shell). Als Polyole können auch Flammschutzpolyole eingesetzt werden, die beispielsweise Phosphat- oder Halogengruppen enthalten. Als Isocyanatkomponente kommen beispielsweise 4,4'-Diphenylmethandiisocyanat (MDI), Isomere des Tolylidendiisocyanats (TDI) oder Hexamethylendiisocyanat (HDI) in Frage. In weiteren Ausführungsformen können auch Polyacrylat-Dispersionen oder andere Kunstharz-Dispersionen als Bindemittel verwendet werden. Erfindungsgemäss besonders bevorzugt verwendete Polyurethan-Dispersionen umfassen Dicrylan PGS (ERBA AG, Zürich, CH), Lamethan ADH-L (CHT) und Ruco-Coat EC 4811 (Rudolf-Chemie). Eine erfindungsgemäss besonders bevorzugt verwendete Polyacrylat-Dispersion ist Dicrylan AS (ERBA AG, Zürich, CH).

Das Bindemittel wird vorzugsweise in einer Menge von 20 bis 70 Gew.-%, vorzugsweise 30 bis 50 Gew.-% der Paste verwendet

Die im Rahmen des erfindungsgemässen Verfahrens verwendeten Schaumstabilisatoren sind im Allgemeinen eine Zubereitung aus Ammonium- und Alkylaminstearat und speziellen Tensiden, insbesondere Dicrylan Stabilisator 7805 (ERBA AG, Zürich, CH).

Der Schaumstabilisator wird vorzugsweise in einer Menge von 10 bis 40 Gew.-%, vorzugsweise 10 bis 20 Gew.-% in Bezug auf das Gesamtgewicht der Paste verwendet.

Des Weiteren können der Paste Vernetzer und/oder anorganische und/oder organische Farbstoffe und Pigmente und/oder weitere Zuschlagstoffe zugegeben werden.

So umfasst die Paste zum Beispiel in bevorzugten Ausführungsformen einen Vernetzer. Als Vernetzer können erfindungsgemäss bevorzugt ein Aminoplastharz oder ein blockiertes Isocyanat verwendet werden. Geeignete Aminoplastharze oder blockierte Isocyanate sind beispielsweise die allgemein bekannten handelsüblichen Produkte Knittex CHN (ERBA) oder Phobol XAN (ERBA). Bevorzugt sind die Melamin-Formaldehyd-Harze, insbesondere alkylmodifizierte Melamin/Formaldehyd-Derivate. Die Melamin/Formaldehyd-Derivate werden üblicherweise in Pulverform oder vorzugsweise in Form von wässrigen Lösungen eingesetzt, die einen Feststoffgehalt von 10 bis 50 Gew.-%, bevorzugt 20 bis 30 Gew.-% aufweisen. Erfindungsgemäss bevorzugt verwendete Vernetzer sind Knittex CHN (ERBA AG, Zürich, CH).

Der Vernetzer wird vorzugsweise in einer Menge von 0 bis 10 Gew.-%, vorzugsweise 1 bis 5 Gew.-% in Bezug auf das Gesamtgewicht der Paste verwendet.

In weiteren bevorzugten Ausführungsformen kann die Paste zusätzlich Pigmente enthalten. Bei den erfindungsgemäss verwendeten Pigmenten kann es sich um anorganische oder organische Pigmente handeln.

Geeignete Pigmente sind beispielsweise Weisspigmente oder Schwarzpigmente. Erfindungsgemäss verwendete Weisspigmente sind Titandioxid, Calciumcarbonat, Zinkcarbonat, Zinkoxid, Silicate oder Kieselsäure, Alabasterbrillantweiss, Kaolin oder ein ähnliches Material vorzugweise Titandioxid. Weisspigmente werden bevorzugt als wässrige Dispersion eingesetzt. Erfindungsgemäss verwendete Schwarzpigmente sind alle Typen von Russ, wie zum Beispiel Gasruss, Acetylenruss, Thermalruss, Furnaceruss und Flammruss, insbesondere Flammruss. Schwarzpigmente werden vorzugsweise in Form einer wässrigen Dispersion mit einem Feststoffgehalt von 10 bis 60%, bevorzugt 20 bis 40% eingesetzt. Vorzugsweise wird das Pigment in einer Menge von 0.01 bis zu 10 Gew.-%, besonders bevorzugt in einer Menge von 0.1 bis 5 Gew.-% in Bezug auf das Gesamtgewicht der Paste verwendet.

In weiteren Ausführungsformen können der Paste zur Einstellung der Viskosität Verdickungsmittel zugesetzt werden. Als Verdickungsmittel eignen sich übliche Verdicker wie Alginate, Hydroxymethylcellulosen, Polyacrylsäuren, Polyvinylpyrrolidone, Silikate und Schichtsilikate (z.B. Betonite), Kaoline, und dergleichen. Erfindungsgemäss verwendete Verdickungsmittel sind bevorzugt Alginate, Hydroxymethylcellulosen oder Acrylsäureverdicker, insbesondere neutralisierte Acrylsäureverdicker, wobei die Viskosität auf einen Bereich von 10 bis 30 dPa^{∗}s, bevorzugt von ca. 20 dPa^{∗}s eingestellt wird.

Vorzugsweise wird das Verdickungsmittel in einer Menge von 0 bis zu 10 Gew.%, besonders bevorzugt in einer Menge von 2 bis 6 Gew.-% in Bezug auf das Gesamtgewicht der Paste verwendet.

In weiteren Ausführungsformen enthält die Paste ein Fluorcarbon zur Senkung der Feuchtigkeitsaufnahme und Quellneigung. Das Fluorcarbon kann ein teil- oder perfluoriertes Polymer sein. Es sind sowohl Homo- als auch Copolymere geeignet. Besonders geeignet sind unter anderem Fluoralkylacrylat-Homopolymere und Fluoralkylacrylat-Copolymere. Bevorzugte Fluorcarbone weisen perfluoralkylhaltige Seitengruppen auf, die beispielsweise durch Polymerisieren von perfluoralkylhaltigen Monomeren in das Fluorpolymer eingebracht werden können.

Beispiele von kommerziell erhältlichen Fluorcarbonen umfassen beispielsweise Tubiguard, Evoral^{®}, Oleophobol, Scotchguard, Repellan, Ruco-Guard, Unidyne, Quecophob und Nuva, und andere.

Vorzugsweise wird das Fluorcarbon in einer Menge von 0.1 bis zu 10 Gew.-% besonders bevorzugt in einer Menge von 1 bis 5 Gew.-% in Bezug auf das Gesamtgewicht der Paste verwendet.

In anderen Ausführungsformen kann die Paste weitere Zusatzstoffe, wie Emulgatoren, Lichtschutzmittel, und/oder weitere Füllstoffe wie Kreide (zur Kostensenkung) enthalten.

In einer weiteren Ausführungsform kann die Paste roten Phosphor, vorzugsweise in Form von Mikrokapseln, enthalten. Bei Kontakt mit der Flamme verbrennt der rote Phosphor sehr viel schneller als das textile Gewebe, wodurch die Rate des Temperaturanstiegs signifikant vergrössert wird und folglich das Blähgraphit schneller erwärmt wird. Dadurch expandiert das Blähgraphit frühzeitiger und erhöht somit die flammhemmende Wirkung. Zusätzlich entstehen bei der Verbrennung von rotem Phosphor diverse Phosphoroxide, mehrheitlich Phosphorpentoxid, welche dem Material Wasser entziehen und es verkohlen. Die bei der Reaktion von Phosphorpentoxid und dem entzogenen Wasser entstehende Phosphorsäure verkohlt das Material weiter und bildet eine zusätzliche Schutzschicht zur Hemmung des Sauerstoffzutritts. Die Verwendung einer auf diesem Wege erhaltenene Paste führt zu einem flammhemmenden textilen Flächenprodukt, das in der Kantenbeflammung gute Werte liefert.

Vorzugsweise wird der rote Phosphor in einer Menge von 5 bis 20 Gew.-% in Bezug auf das Gesamtgewicht der Paste verwendet.

Es leuchtet unmittelbar ein, dass die verschiedenen Zusatzstoffe strukturell überlappen können.

Die Paste wird vor dem Auftragen auf den textilen Träger kontinuierlich aufgeschäumt, in der Regel mechanisch. Dies kann in einem Schaumgenerator durch das Einblasen von Druckluft und das Schlagen zwischen einem Rotor und einem Stator erfolgen. Eine weitere Möglichkeit besteht darin, die Paste in einem Schaummixgerät unter Eintrag hoher Scherkräfte aufzuschäumen. Vorzugsweise wird ein Hansa ECO-MIX (Hansamixer) verwendet. Das Schäumen wird derart durchgeführt, dass die erhaltene Schaumdichte je nach Einsatzgebiet für verpresste Schäume zwischen 80 bis 300 g/l, vorzugsweise 80 bis 200 g/l, besonders bevorzugt 100 bis 150 g/l beträgt. Für Stabilschäume beträgt die bevorzugte Dichte zwischen 150 und 600 g/l, wobei dem Fachmann bekannt ist, dass die besonders bevorzugten Bereiche sich aus der Endanwendung ergeben und nicht pauschal angegeben werden können.

Der Beschichtungsprozess des Schaums erfolgt unter Verwendung eines Schaumauftragssystems mittels Walzenrakel, Luftrakel, Variopress oder bevorzugt mit Walzenrakel. Der Schaum wird vor die Beschichtungsrakel gepumpt, wo eine durch die gewählte Spaltdicke in der Auflage regulierbare Beschichtung stattfindet. Die Spaltdicken liegen in der Regel in einem Bereich von ca. 0.5 bis 3 mm, im Allgemeinen vorzugsweise 1 mm, wobei der Fachmann je nach Anwendung von dieser Grösse auch abweichen kann. In einer weiteren Ausführungsform können für noch höhere Beschichtungsauflagen auch mehrere Schichten übereinander beschichtet werden.

Der Schaum wird in der Regel in einer Schichtdicke von < 2 mm, bevorzugt ca. 0.5 bis 2 mm, vorzugsweise 0.8 bis 1.2 mm, auf ein Textil aufgetragen. Die Schichtdicke wird in der Regel mit der Maximalgrösse der Graphitteilchen abgestimmt, sodass der Spalt vorzugsweise mindestens der 1.6-fachen maximalen Teilchengrösse entspricht. Die Menge an aufzutragender Schaumbeschichtung variiert je nach erwünschter Eigenschaft des erfindungsgemässen textilen Flächenprodukts, und beträgt ca. 20 bis 400 g/m², wobei dem Fachmann bekannt ist, dass sich der bevorzugte Bereich wiederum aus dem Anwendungsgebiet herleitet und nicht pauschal angegeben werden kann.

In einem ersten Schritt wird der erhaltene Schaum im Spannrahmen bei in der Regel tieferen Temperaturen von ca. 80 bis 100 °C getrocknet (um eine Vernetzung des verwendeten Polymer-Bindemittels zu vermeiden). Am Auslauf des Spannrahmens wird der getrocknete Schaum durch zwei Walzen verpresst, wodurch der Schaum zerfällt und zu einer membranähnlichen Schicht verpresst wird. Durch die anschliessende Kondensation wird die Schicht in dieser Form fixiert. Dieses Verfahren eignet sich in der Regel für alle Laminate für Oberbekleidung, Hosen und Ähnliches.

Im Falle von Stabilschaumbeschichtungen mit höheren Dichten wird die Paste gleich wie beim oben beschriebenen Instabilschaum kontinuierlich verschäumt und auf das Textil aufgetragen. Die Stabilschäume werden im Spannrahmen ebenfalls bei ca. 80 bis 100 °C vorsichtig getrocknet. Als zusätzliche Stabilitätserhöhung des Schaums kann eine teilweise oder ganze Vernetzung erzielt werden in dem die hintersten Spannrahmenfelder auf eine höhere Temperatur von ca. 120 bis 170 °C eingestellt werden.

Eine vollständige Vernetzung kann durch einen zusätzlichen Kondensationsschritt bei einer Temperatur von ca. 130 bis 170 °C bewirkt werden. Stabilschäume sind von Nutzen, wenn zusätzlich zum Flammschutz haptische (zum Beispiel ein Schaumgriff), optische (zum Beispiel eine neoprenartige Optik) oder sonstige Anforderungen an das Textil gestellt werden. So kann beispielsweise durch Stabilschäume ein leichter Schlagschutz oder Wärmeisolierung erreicht werden.

Die Flammschutzbeschichtung eignet sich besonders für Ware als Oberbekleidung. Als Trägermaterial ist grundsätzlich jedes textile Substrat verwendbar. Geeignete textile Substrate sind beispielsweise gewebte, gewirkte oder vliesartige textile Trägermaterialien oder eine Kombination davon. Fasern pflanzlichen oder tierischen Ursprungs, Chemiefasern, Fasern aus synthetischen Polymeren, anorganische Chemiefasern, vorzugsweise Baumwolle, Synthesefasern wie Polyamid, Polyacryl, Elasthan, Polyester und/oder Polyethylen haben sich als geeignet für die Oberware erwiesen. Es versteht sich, dass schmelzbare Materialien für eine Beschichtung mit Blähgraphit und die Flammschutzanwendung vorteilhaft sind.

Ein erfindungsgemässes flammhemmendes textiles Flächenprodukt umfasst eine Mehrzahl von Schichten, wobei es sich bei der ersten Schicht um eine textile Trägerschicht handelt. Als eine weitere Schicht kann beispielsweise eine erfindungsgemässe Flammschutzbeschichtung angeordnet sein, welche gemäss obiger Beschreibung auf die textile Trägerschicht aufgebracht ist.

In einer bevorzugten Ausführungsform kann die Oberware mit Leuchtfarben teilweise (in bestimmten Mustern) oder ganz eingefärbt werden, um (gemäss EN ISO 20471) dem Kleidungsstück in verschiedensten Umgebungsbedingungen gute Wahrnehmbarkeit zu gewährleisten. Die Verwendung von solchen Warn- oder Signalfarben findet notwendigerweise in vielen Bereichen Anwendung, wie z. B. Polizei, Feuerwehr, Eisenbahn-Mitarbeiter, etc.

Als eine weitere Schicht können an geeigneter Stelle eine oder mehrere wasserdampfdurchlässige, atmungsaktive Membranen angeordnet werden, bevorzugt mikroporöses PTFE, um dem Textil Atmungsaktivität zu verleihen.

Die folgenden Beispielrezepturen sind lediglich als repräsentative Ausführungsformen und nicht als Beschränkung des Umfangs der vorliegenden Erfindung zu verstehen. Zusätzlich zu diesen Rezepturen ergeben sich dem Fachmann aus der gesamten Beschreibung verschiedene mögliche Abwandlungen und Modifikationen, die ebenfalls unter den Schutzbereich der Ansprüche fallen.

### Beispiele

### Beispiel 1: Instabilschaum

| Gew.-% | Bestandteil | Beispiel |
|---|---|---|
| 35% | Binder: Aliphatische Polyesterurethan-Dispersion, 50% Feststoffgehalt, wie auch aromatische oder auch Polyetherurethane; alternativ Polyacrylat-Dispersionen (sehr gute Hydrolysebeständigkeit) oder andere Kunstharz-Dispersionen. Vorzugsweise als wässrige Dispersionen. | Dicrylan PGS |
| 15% | Schaumstabilisator: Zubereitung aus Ammonium- und Alkylaminstearat und speziellen Tensiden | Dicrylan Stabilisator 7805 |
| 1% | Pigment: Wässrige Flammruss-Dispersion | |
| 3% | Vernetzer: Alkylmodifiziertes Melamin/Formaldehyd-Derivat in wässriger Lösung. Alternativ auch Dispersionen von blockierten oder freien Isocyanaten. | Knittex CHN |
| 41% | Blähgraphit | |

Obige Rezeptur wird auf 140 g/l zu einem Instabilschaum verschäumt und bei 1 mm Spalthöhe und 50 g/m² Beschichtungsauflage auf das Textil aufgetragen.

### Beispiel 2: Instabilschaum

### 1. Beschichtungsstrich für Leuchtfarben (EN 20471)

| Gew.-% | Bestandteil | Beispiel |
|---|---|---|
| 55% | Binder: Aliphatische Polyesterurethan-Dispersion, 50% Feststoffgehalt, wie auch aromatische oder auch Polyetherurethane; alternativ Polyacrylat-Dispersionen (sehr gute Hydrolysebeständigkeit) oder andere Kunstharz-Dispersionen. Vorzugsweise als wässrige Dispersionen. | Dicrylan PGS |
| 25% | Schaumstabilisator: Zubereitung aus Ammonium- und Alkylaminstearat und speziellen Tensiden | Dicrylan Stabilisator 7805 |
| 15% | Pigment: Wässrige TiO₂-Dispersion | |
| 5% | Vernetzer: Alkylmodifiziertes Melamin/Formaldehyd-Derivat in wässriger Lösung. Alternativ auch Dispersionen von blockierten oder freien Isocyanaten. | Knittex CHN |

Obige Rezeptur wird auf 140 g/l zu einem Instabilschaum verschäumt und bei 0.2 mm Spalthöhe und 30 g/m² Beschichtungsauflage auf das Textil aufgetragen.

### 2. Beschichtungsstrich

| Gew.-% | Bestandteil | Beispiel |
|---|---|---|
| 35% | Binder: Aliphatische Polyesterurethan-Dispersion, 50% Feststoffgehalt, wie auch aromatische oder auch Polyetherurethane; alternativ Polyacrylat-Dispersionen (sehr gute Hydrolysebeständigkeit) oder andere Kunstharz-Dispersionen. Vorzugsweise als wässrige Dispersionen. | |
| 15% | Schaumstabilisator: Zubereitung aus Ammonium- und Alkylaminstearat und speziellen Tensiden | |
| 1% | Pigment: Wässrige Flammruss-Dispersion | |
| 3% | Vernetzer: Alkylmodifiziertes Melamin/Formaldehyd-Derivat in wässriger Lösung. Alternativ auch Dispersionen von blockierten oder freien Isocyanaten | |
| 41% | Blähgraphit | |

Obige Rezeptur wird auf 140 g/l zu einem Instabilschaum verschäumt und bei 1 mm Spalthöhe und 50 g/m² Beschichtungsauflage aufgetragen.

### Beispiel 3: Ware für Oberbekleidung (Standard)

Oberware: 95% Polyamid, 5% Elasthan, Ripstop Bindung
Futter: 45% Baumwolle, 55% Modacryl FR, Jersey-Strick

### Herstellungsschritte:

Beschichtung Links auf Oberware
Kaschieren mit Futter
Trocknen bei 80-100 °C ansteigend (60-180 s Verweilzeit, optimal 105 s Verweilzeit, Oberflächentemperatur 80-90 °C)
Im Auslauf verpressen (Zerdrücken vom Schaum zu einer membranartigen Schicht)
anschliessend
Kondensieren bei 150 °C (Verweilzeit 45-90 s bei Temperaturen > 140 °C)

| Rezeptur: | | |
|---|---|---|
| 30-40% | Dicrylan PGS (ERBA) | Polyurethan Binder |
| 10% | Wasser | |
| 15%-20% | Dicrylan Stabilisator 7805 | Schaumstabilisator |
| 1-5% | Tubiguard BS | Fluorcarbon |
| 0.1-2% | Pigment | |
| 1-5% | Knittex CHN | Vernetzer |
| 20-30% | Blähgraphit | Flammschutz-Aktivstoff |

### => 140 g/l Verschäumung, 1 mm Spalthöhe, 50 g/m² Beschichtungsauflage, Instabilschaum (Siehe unten)

### Beispiel 4: Ware für Oberbekleidung in Warnfarben oder für helle Farben

| | |
|---|---|
| Oberware: | 100% Polyester in Leinwand-Bindung |
| Futter: | 45% Baumwolle, 55% Modacryl FR in Jersey-Strick |

### Herstellungsschritte:

Beschichtung Links auf Oberware mit weissem Schaum um die geforderten Normen (EN ISO 20471) für Leuchtfarben bzw. die Optik für helle Farben erreichen zu können
Trocknen bei 80-100 °C ansteigend (30-120 s Verweilzeit, vorzugsweise 45 s Verweilzeit, Oberflächentemperatur 80-90 °C)
Im Auslauf verpressen (Zerdrücken des Schaums zu einer Membranartigen Schicht)
anschliessend
Beschichtung Links auf Oberware
Kaschieren mit Futter
Trocknen bei 80-100 °C ansteigend (60-180 s Verweilzeit, vorzugsweise 105 s Verweilzeit, Oberflächentemperatur 80-90 °C)
Im Auslauf verpressen (Zerdrücken des Schaums zu einer membranartigen Schicht)
anschliessend
Kondensieren bei 150 °C (Verweilzeit 45-90 s bei Temperatur > 140 °C)

### Rezeptur:

| 1. Beschichtunqsstrich | | |
|---|---|---|
| 30-40% | Dicrylan PGS (ERBA) | PolyurethanBinder |
| 0-10% | Wasser | |
| 15%-20% | Dicrylan Stabilisator 7805 | Schaumstabilisator |
| 1-5% | Tubiguard BS | Fluorcarbon |
| 1-10% | Weisspigment | Titandioxid |
| 1-5% | Knittex CHN | Vernetzer |

=> 140 g/l Verschäumung, 0.2 mm Spalthöhe, 20 g/m² Beschichtungsauflage, Instabilschaum (siehe oben)

### 2. Beschichtungsstrich

| | | |
|---|---|---|
| 30-40% | Dicrylan PGS (ERBA) | Polyurethan Binder |
| 10% | Wasser | |
| 15-20% | Dicrylan Stabilisator 7805 | Schaumstabilisator |
| 1-5% | Tubiguard BS | Fluorcarbon |
| 0.1-2% | Pigment | |
| 1-5% | KnittexCHN | Vernetzer |
| 5-30% | Blähgraphit | Flammschutz-Aktivstoff |

### => 140 g/l Verschäumung, 1 mm Spalthöhe, 50 g/m² Beschichtungsauflage, Instabilschaum (siehe oben)

### Beispiel 5: Schaum mit rotem Phosphor

| | | |
|---|---|---|
| 30-40% | Dicrylan PGS (ERBA) | Polyurethan Binder |
| 0-10% | Wasser | |
| 15-20% | Dicrylan Stabilisator 7805 | Schaumstabilisator |
| 1-5% | Tubiguard BS | Fluorcarbon |
| 0.1-2% | Pigment | |
| 1-5% | Knittex CHN | Vernetzer |
| 20-30% | Blähgraphit | Flammschutz-Aktivstoff |
| 5-10% | EXOLIT RP 607 | Mikroverkapselter roter Phosphor |

=> 140 g/l Verschäumung, 1 mm Spalthöhe, 50 g/m² Beschichtungsauflage, Instabilschaum (siehe oben)

## Patentansprüche

1. Verfahren zur Herstellung eines flammhemmenden, textilen Flächenproduktes enthaltend eine textile Trägerschicht umfassend die Schritte:
a) Reduktion des auswaschbaren Salzgehaltes von plättchenförmigem Blähgraphit durch Nachwaschen, vorzugsweise auf einen Anteil von unter 0.8%, bevorzugt auf unter 0.5%, besonders bevorzugt auf unter 0.2% wobei plättchenförmiger Blähgraphit mit einem mittleren Plättchen-Durchmesser von mindestens 0.5 mm, bevorzugt 0.5-3.0 mm, und/oder einem Mindestanteil von 70% mit Maschenweite > 50 Mesh (0.3 mm) gewählt wird,
b) Herstellung einer Paste bestehend aus mindestens einem Bindemittel, mindestens einem Schaumstabilisator und gemäss a) salzgehaltreduziertem Blähgraphit,
c) mechanisches Aufschäumen einer nach b) hergestellten Paste,
d) Beschichtung einer textilen Trägerschicht mit einem nach c) hergestellten Schaum,
e) Trocknung der Schaumschicht, und
f) gegebenenfalls Verpressung der Schaumschicht nach der Trocknung.

2. Verfahren nach Anspruch 1, **dadurch gekennzeichnet, dass** in Schritt d) eine gewebte, gewirkte oder vliesartige textile Trägerschicht beschichtet wird.

3. Verfahren nach Anspruch 1 oder 2, **dadurch gekennzeichnet, dass** in Schritt e) zur Herstellung eines Instabilschaumes die Trocknung bei einer Temperatur von 80-100 °C durchgeführt wird.

4. Verfahren nach einem der vorangehenden Ansprüche, **dadurch gekennzeichnet, dass** zur Herstellung eines Stabilschaumes in Schritt e) die Trocknung bei einer Temperatur von 80-100 °C durchgeführt wird und die Vernetzung bei 120-170 °C durchgeführt wird.

5. Verfahren nach einem der vorangehenden Ansprüche, **dadurch gekennzeichnet, dass** die Beschichtung in Schritt d) mit einer Schaummenge von 20 bis 400 g/m² und/oder mit einer Schichtdicke von 0.2 bis 5 mm erfolgt.

6. Flammhemmendes, textiles Flächenprodukt, hergestellt nach einem Verfahren der Ansprüche 1-5, **dadurch gekennzeichnet, dass** die Flammschutzbeschichtung plättchenförmiges Blähgraphit mit einem Anteil auswaschbaren Salzgehaltes von unter 0.8%, mindestens ein Bindemittel und mindestens einen Schaumstabilisator enthält.

7. Flammhemmendes, textiles Flächenprodukt, hergestellt nach Anspruch 6, **dadurch gekennzeichnet, dass** der Anteil des Blähgraphits in der Flammschutzbeschichtung zwischen 5 und 50 Gew.-% beträgt.

8. Flammhemmendes, textiles Flächenprodukt nach einem der Ansprüche 6 oder 7, **dadurch gekennzeichnet, dass** der Anteil des mindestens einen Polyurethan-Bindemittels zwischen 30 und 50 Gew.-% beträgt.

9. Flammhemmendes, textiles Flächenprodukt nach einem der Ansprüche 6 bis 8, **dadurch gekennzeichnet, dass** der Anteil des mindestens einen Schaumstabilisators zwischen 10 und 20 Gew.-% beträgt.

10. Flammhemmendes, textiles Flächenprodukt nach einem der Ansprüche 6 bis 9, **dadurch gekennzeichnet, dass** der Blähgraphit bei einer Temperatur von 1000 °C eine Expansion von 40 bis 400 ml/g aufweist

11. Flammhemmendes, textiles Flächenprodukt, nach einem der Ansprüche 6 bis 10, **dadurch gekennzeichnet, dass** die Flammschutzbeschichtung 5-30 Gew.-% plättchenförmigen Blähgraphits, 30-50 Gew.-% mindestens eines Polyurethan-Bindermittels und 10- 20 Gew.-% mindestens eines Schaumstabilisators enthält.

12. Flammhemmendes, textiles Flächenprodukt, nach einem der Ansprüche 6 bis 11, **dadurch gekennzeichnet, dass** die Flammschutzbeschichtung zusätzlich mindestens ein Pigment und/oder mindestens einen Vernetzer und/oder mindestens ein Fluorcarbon und/oder roten Phosphor enthält.

13. Flammhemmendes, textiles Flächenprodukt, nach einem der Ansprüche 6 bis 12, **dadurch gekennzeichnet, dass** es eine Mehrzahl an Beschichtungen umfasst, wobei es sich bei der ersten Schicht um eine textile Trägerschicht handelt, auf der mindestens eine Beschichtung bestehend aus der Flammschutzbeschichtung nach einem der vorangehenden Ansprüche aufgetragen ist.

14. Flammhemmendes, textiles Flächenprodukt nach Anspruch 13, **dadurch gekennzeichnet, dass** mindestens eine Beschichtung wasserdampfdurchlässig und atmungsaktiv ist.

15. Flammhemmendes textiles Flächenprodukt nach den Ansprüchen 13 oder 14, **dadurch gekennzeichnet, dass** das flammhemmende textile Flächenprodukt eine Oberware umfasst, wobei die Oberware teilweise oder ganz mit Leuchtfarbstoffen gefärbt ist.

16. Verwendung von flammhemmenden, textilen Flächenprodukten nach einem der Ansprüche 6 bis 15 bei der Herstellung von Flammschutzbekleidung.

## Claims

1. Process for producing a flame-retardant, textile sheet product containing a textile carrier layer, comprising the steps of:
a) reduction of the washing-removable salt content of platelet-form expandable graphite by additional washing, preferably to a proportion of below 0.8%, preferably to below 0.5%, particularly preferably to below 0.2%, with platelet-form expandable graphite with an average platelet diameter of at least 0.5 mm, preferably 0.5-3.0 mm, and/or with a minimum proportion of 70% having a mesh size of > 50 mesh (0.3 mm) being selected,
b) production of a paste consisting of at least one binder, at least one foam stabilizer and expandable graphite which has been reduced in salt content as specified in a),
c) mechanical foaming of a paste produced as per b),
d) coating of a textile carrier layer with a foam produced as per c),
e) drying of the foam layer, and
f) optionally pressing of the foam layer after drying.

2. Process according to Claim 1, **characterized in that** a woven, knitted or nonwoven-like textile carrier layer is coated in step d).

3. Process according to Claim 1 or 2, **characterized in that** in step e) the drying is carried out at a temperature of 80-100°C to produce an unstable foam.

4. Process according to any of the preceding claims, **characterized in that** the drying is carried out at a temperature of 80-100°C and crosslinking is carried out at 120-170°C in step e) to produce a stable foam.

5. Process according to any of the preceding claims, **characterized in that** the coating is effected in step d) using an amount of foam of from 20 to 400 g/m² and/or with a layer thickness of from 0.2 to 5 mm.

6. Flame-retardant, textile sheet product produced by a process of Claims 1-5, **characterized in that** the flame-retardant coating contains platelet-form expandable graphite having a proportion of washing-removable salt content of below 0.8%, at least one binder and at least one foam stabilizer.

7. Flame-retardant, textile sheet product produced according to Claim 6, **characterized in that** the proportion of expandable graphite in the flame-retardant coating is between 5 and 50% by weight.

8. Flame-retardant, textile sheet product according to either of Claims 6 and 7, **characterized in that** the proportion of the at least one polyurethane binder is between 30 and 50% by weight.

9. Flame-retardant, textile sheet product according to any of Claims 6 to 8, **characterized in that** the proportion of the at least one foam stabilizer is between 10 and 20% by weight.

10. Flame-retardant, textile sheet product according to any of Claims 6 to 9, **characterized in that** the expandable graphite has an expansion of from 40 to 400 ml/g at a temperature of 1000°C.

11. Flame-retardant, textile sheet product according to any of Claims 6 to 10, **characterized in that** the flame-retardant coating contains 5-30% by weight of platelet-form expandable graphite, 30-50% by weight of at least one polyurethane binder and 10-20% by weight of at least one foam stabilizer.

12. Flame-retardant, textile sheet product according to any of Claims 6 to 11, **characterized in that** the flame-retardant coating additionally contains at least one pigment and/or at least one crosslinker and/or at least one fluorocarbon and/or red phosphorus.

13. Flame-retardant, textile sheet product according to any of Claims 6 to 12, **characterized in that** it comprises a plurality of coatings, with the first layer being a textile carrier layer on which at least one coating consisting of the flame-retardant coating according to any of the preceding claims is applied.

14. Flame-retardant, textile sheet product according to Claim 13, **characterized in that** at least one coating is permeable to water vapour and breathable.

15. Flame-retardant, textile sheet product according to Claim 13 or 14, **characterized in that** the flame-retardant textile sheet product comprises an outer material, wherein the outer material is partly or entirely coloured with luminous dyes.

16. Use of flame-retardant, textile sheet products according to any of Claims 6 to 15 in the production of flame protection clothing.

## Revendications

1. Procédé de fabrication d'une étoffe textile ignifuge contenant une couche support textile comprenant les étapes suivantes :
a) réduction de la teneur en sels extractibles par lavage de graphite expansible lamellaire par post-lavage, de préférence à une proportion inférieure à 0,8 %, de préférence inférieure à 0,5 %, d'une manière particulièrement préférée inférieure à 0,2 %, le graphite expansible lamellaire choisi ayant un diamètre moyen des lamelles d'au moins 0,5 mm, de préférence de 0,5 à 3,0 mm, et/ou une proportion minimale de 70 % ayant une ouverture de maille > 50 mesh (0,3 mm),
b) fabrication d'une pâte consistant en au moins un liant, au moins un stabilisant de mousse et un graphite expansible à teneur réduite en sels selon a),
c) expansion mécanique d'une pâte fabriquée selon b),
d) revêtement d'une couche support textile avec une mousse fabriquée selon c),
e) séchage de la couche de mousse, et
f) éventuellement compression de la couche de mousse après le séchage.

2. Procédé selon la revendication 1, **caractérisé en ce que** dans l'étape d) on revêt une couche support textile tissée, tricotée ou de type non-tissé.

3. Procédé selon la revendication 1 ou 2, **caractérisé en ce que** dans l'étape e), pour fabriquer une mousse instable, le séchage est mis en œuvre à une température de 80 à 100 °C.

4. Procédé selon l'une des revendications précédentes, **caractérisé en ce que**, pour fabriquer une mousse stable dans l'étape e), le séchage est mis en œuvre à une température de 80 à 100 °C et la réticulation est mise en œuvre à 120 à 170 °C.

5. Procédé selon l'une des revendications précédentes, **caractérisé en ce que** le revêtement dans l'étape d) est réalisé avec une quantité de mousse de 20 à 400 g/m² et/ou une épaisseur de couche de 0,2 à 5 mm.

6. Étoffe textile ignifuge fabriquée par un procédé selon les revendications 1 à 5, **caractérisée en ce que** le revêtement retardateur de flamme contient un graphite expansible lamellaire, avec une proportion de sels extractibles par lavage inférieure à 0,8 %, au moins un liant et au moins un stabilisant de mousse.

7. Étoffe textile ignifuge fabriquée selon la revendication 6, **caractérisée en ce que** la proportion du graphite expansible dans le revêtement retardateur de flamme est comprise entre 5 et 50 % en poids.

8. Étoffe textile ignifuge selon l'une des revendications 6 ou 7, **caractérisée en ce que** la proportion de l'au moins un liant à base de polyuréthane est comprise entre 30 et 50 % en poids.

9. Étoffe textile ignifuge selon l'une des revendications 6 à 8, **caractérisée en ce que** la proportion de l'au moins un stabilisant de mousse est comprise entre 10 et 20 % en poids.

10. Étoffe textile ignifuge selon l'une des revendications 6 à 9, **caractérisée en ce que** le graphite expansible présente à une température de 1 000 °C une expansion de 40 à 400 ml/g.

11. Étoffe textile ignifuge selon l'une des revendications 6 à 10, **caractérisée en ce que** le revêtement retardateur de flamme contient 5 à 30 % en poids de graphite expansible lamellaire, 30 à 50 % en poids d'au moins un liant de polyuréthane et 10 à 20 % en poids d'au moins un stabilisant de mousse.

12. Étoffe textile ignifuge selon l'une des revendications 6 à 11, **caractérisée en ce que** le revêtement retardateur de flamme contient en outre au moins un pigment et/ou au moins un agent de réticulation et/ou au moins un fluorocarbure et/ou du phosphore rouge.

13. Étoffe textile ignifuge selon l'une des revendications 6 à 12, **caractérisée en ce qu'**il comprend un grand nombre de revêtements, la première couche étant une étoffe textile, sur laquelle au moins un revêtement, constitué du revêtement retardateur de flamme selon l'une des revendications précédentes, est appliqué.

14. Étoffe textile ignifuge selon la revendication 13, **caractérisée en ce qu'**au moins un revêtement est perméable à la vapeur d'eau et est respirant.

15. Étoffe textile ignifuge selon les revendications 13 ou 14, **caractérisée en ce que** l'étoffe textile ignifuge comprend un tissu de dessus, le tissu de dessus étant en totalité ou en partie teint par des colorants luminescents.

16. Utilisation d'étoffes textiles ignifuges selon l'une des revendications 6 à 15 pour la fabrication de vêtements ignifuges.
